# EUROPEAN PATENT APPLICATION

(11) **EP 2 168 706 A1**
(43) Date of publication of application: **31.03.2010**
(21) Application number: 08017108.5
(22) Date of filing: 29.09.2008
(51) Int. Cl.: B23K 9/133, B65H 49/04, B65H 57/18, B65H 59/06, B23K 9/32

(54) **Retainer for a welding wire container with flexible flaps; combination of a welding wire coil and such retainer**

(71) Applicant: SIDERGAS SpA, 37010 S. Ambrogio di Valpolicella (IT)
(72) Inventor: Fagnani, Alessandro, 37015 S. Ambrogio di Valpolicella (IT); Gelmetti, Carlo, 37017 Lazise (IT)
(74) Representative: Prinz & Partner

(57) **Abstract**

The present invention relates to a retainer (20) for a welding wire container, having a cover portion (24) adapted to be arranged on top of a welding wire coil, the cover portion (24) having a plurality of flexible flaps (26), the flaps (26) being flexible enough to hang downwardly under the influence of gravity.

## Description

The invention relates to a retainer for a welding wire container.

Welding wire is usually supplied to plants where welding robots are utilized, in the form of a coil surrounded by a container. The container can be made mainly from cardboard, and the weight of the welding wire coil can range from a couple of kilograms up to several hundred kilograms. The welding wire coil is formed by winding the wire in an elliptical pattern starting from a base surface whereby a welding wire coil is created having a diameter basically corresponding to the diameter of the container in which it is placed later on. The center of the welding wire coil is hollow.

Today, the welding wire is usually wound torsion-free which allows to effectively wind large quantities of welding wire in containers which have a square cross-section or a circular cross-section. As a result of the torsion-free winding technique, the individual turns of welding wire lie flat on each other. When the welding wire is unwound in order to supply it to a welding machine, it is withdrawn turn by turn, starting at the uppermost turn. If however torsion-free wire is unwound from a flat position, there is the problem that tangles and jams can occur. In particular, tangles can occur between the uppermost layers if their positions with respect to each other changes. A possible cause for the occurrence of tangles is that the wire is still loaded with tension due to defective winding by the winding machine. This occurs from time to time when welding wires with higher columnar strengths are wound. Tension in the wire can also result from a misalignment of feed roll grooves or from excessive pressure adjustment on the feed rolls. Finally, the wire strands in some cases can become misplaced, during transportation, by either a deformation of the welding wire container or as the result of rough handling. In this case, the welding wire strands tend to fall into the center of the pack and form knots or tangles. Whatever the reason for the formation of tangles and knots was, the result is downtime and costly production interruptions.

In order to control the welding wire pay-out during withdrawal or unwinding, retainers are employed which are placed on top of the welding wire coil and which serve to prevent the uppermost wire strands from tangling with each other. One type of retainer consists of a rigid plate or ring which is combined with a cylindrical center element (please see US 5,277,314). The rigid plate has the function of holding down the wire strand while the center element keeps those wire strands sorted which accidentally fall into the center of the pack.

Another type of retainer consists of a rigid plate with flexible flaps combined with a cylindrical center element (please see US 5,845,862 and US 6,547,176 ). The flaps, which are bend upwardly, lean against the center element and help sorting the wire strands in case the center element fails to control them.

Another type of retainer consists in a combination of two plates acting independently, and the cylindrical center element.

Further, a retainer is known which consists of a combination of a rigid bottom plate and an upper, lighter plate with fingers (please see WO 2007/112972). Here, no center element is necessary. The fingers of the upper plate of the retainer are supposed to hold the exiting wire strands and to keep them from falling into the center of the pack.

All of the above types of retainers however have the disadvantage that the wire is first drawn towards the center of the pack before it can be pulled out. This causes deformations and tangles because the wire is pulled from the coil at an unnatural angle (especially at the bottom of the pack where the angle is more accentuated). In case of the last mentioned type of retainer, the fingers of the upper plate worsen the deformation when a smaller diameter welding wire is used.

Another type of retainer is shown in US 5,746,380 which shows a welding wire coil on the upper surface on which is arranged a number of spherical elements, for example round wooden balls. These are arranged loosely on the upper surface of the coil and serve for holding down the welding wire due to their weight. This arrangement allows to unwind the wire from its current place on top of the welding wire coil, which due to the wire being wound elliptically can be anywhere between the inner and the outer circumference of the coil. The problem here is that this system only works in combination with a cylindrical center element, and the welding wire has to completely fill the gap between the center element and the wall of the container as otherwise the spherical elements would fall into the space between the welding wire coil and the container wall or the center element, resulting in the welding wire being jammed. If however the welding wire is wound tight against the center element, it forcibly scratches against such center element while being unwound, and this can often be cause of more problems and tangles. In addition, this system can only be used with cylindrical containers so that it is not possible to use square containers which have proven easier to recycle.

US Patent 7,004,318 shows a retainer which consists of a combination of three rigid plates. Two of them, namely an inner and an outer plate, are arranged so as to leave open an angular space between them. On top of these two plates, the third plate is arranged which has a diameter somewhere in between the diameter of the inner and the diameter of the outer plate. The welding wire is withdrawn through the angular space between the inner and the outer plate of the bottom layer, moving the upper plate in an elliptical manner. The problem here is that the plates cannot easily interact with one another because of friction. Further, this system requires a cylindrical center element resulting in the above mentioned problems when the welding wire is withdrawn.

The object of the invention is to provide a retainer which ensures that the welding wire can be withdrawn without tangles or knots, which can be used without employing a cylindrical center element in the welding wire coil and which also can be used for both circular containers and square containers.

According to the invention, this object is solved by providing a retainer having a cover portion adapted to be arranged on top of a welding wire coil, the cover portion having a plurality of flexible flaps, the flaps being flexible enough to hang downwardly under the influence of gravity. According to the invention, there is also provided a combination of a welding wire coil and a retainer of this type wherein the flaps hang loosely into the interior of the welding wire coil. The retainer according to the invention is based on the idea of providing sufficient support for the wire strands and to prevent them from accidentally falling into the center space of the coil without there being a need to use a cylindrical center element, while at the same time allowing the wire strands to be withdrawn at their current location, without there being the need to first drag the wire towards the interior space of the coil. When the wire is withdrawn, it bends upwardly the respective flap at the place where the wire is lifted from the upper surface of the coil. As the place where the wire is lifted from the upper surface of the coil travels in an elliptical manner around the coil, the individual flaps are bent upwardly one after the other and then return to their original position. The movement which is thus generated is comparable to "The Wave" or "La Ola", namely a wave of spectators in a packed sport stadium which briefly stand and raise their arms, and then return to their usual seated position, thereby creating the visual effect of a wave traveling through the crowd. In the retainer according to the invention, the shortly "standing" flap results from the welding wire being lifted from the upper surface of the coil, while all "seated" flaps, meaning the flaps which loosely hang into the interior of the welding wire coil, help to keep the welding wire strands in their original position.

According to a preferred embodiment of the invention, the cover portion is formed from a flexible material, and the flaps are formed by slots in the material of the cover portion. This allows to manufacture the retainer with low costs.

Preferably, the slots extend in a direction which encloses an acute angle with a radial direction. Providing flaps which are not directed exactly radially, but extend slightly in the direction in which the point travels at which the upper strand is lifted from the upper surface of the welding wire coil, makes it easier for the wire strand to be lifted underneath the retainer.

According to the preferred embodiment of the invention, the slots extend almost up to the outer edge of the cover portion. This allows the uppermost wire strand to be directly lifted from the upper surface of the welding wire coil even if placed at the outer circumference of the coil, without there being the necessity to first drag the wire strand towards the center of the welding wire coil.

Preferably, more than 20 flaps are provided. In particular, there are more than 50 flaps provided, most preferably approximately 100 flaps. This high number of flaps has proven to be a good compromise between a light weight of the individual flap so that it can be easily lifted upwardly by the uppermost wire strand, and sufficient strength of the individual flap so that it is strong enough to withstand repeated lifting operations. Furthermore, a high number of flaps ensures that there always is a very high number of flaps acting so as to keep the welding wire strands in their designated position even though a few flaps are currently dragged upwardly by the uppermost welding wire strand.

According to a preferred embodiment, a frame is provided which circumscribes the cover portion. The frame serves for guiding the retainer in the interior of the container. Furthermore, it serves for holding the cover portion in the designated shape even though the cover portion itself can be formed from a flexible and possibly light weight material, which keeps the costs down. In order to avoid mounting costs, the frame and the cover can be molded together.

The cover portion can preferably be made from a thin rubber or silicone layer. Depending on the size of welding wire which is to be placed in the respective container provided with the retainer, the thickness of the rubber layer can vary. For smaller diameter welding wire, a lighter cover portion is sufficient, while thicker welding wire may require a cover portion with more weight.

According to a preferred embodiment of the invention which is not necessarily related to the provision of the flaps, a positioning opening for an end portion of the welding wire coil is provided. The positioning opening allows arranging the end portion of the welding wire coil at the outer circumference of the coil. This is a significant advantage over prior art retainers using a rigid ring. In most welding wire applications, the welding wire shall be provided without any interruption. This can be achieved by welding the end of the welding wire coil currently used to the start of a spare welding wire coil arranged adjacent thereto. As soon as the welding wire of the first container is completely consumed, the system changes over to the welding wire provided by the second container. In order to allow the welding wire of the first container to be completely consumed, the end portion of the welding wire coil has to be guided upwardly towards the retainer and then inwardly so that the end portion can be fed through the circular opening of the retainer ring. This results in the uppermost wire strand currently withdrawn scratching against the end portion of the welding wire which is fed between the upper surface of the welding wire coil and the retainer. In the system according to the invention however, the end portion of the welding wire can be fed straight upwardly through the retainer. In the simplest embodiment, the positioning opening is formed by the end of one of the slots forming the flaps. In a more advanced embodiment, one of the slots can be formed longer than the remaining ones, thereby forming a positioning opening which is arranged outside the outer circumference of the welding wire coil. The provision of the positioning opening further results in a more simple use of the welding wire container. In the prior art systems, both ends of the welding wire coil, namely the forward end which is to be withdrawn from the container and the end portion which is to be connected to the subsequent container, extend through the central opening of the retainer. If an operator mixes the two ends and accidentally connects the forward end of the welding wire coil to the subsequent container while starting to withdraw the welding wire from the end portion, the whole system jams. In a system according to the invention, the forward end of the welding wire is presented to the operator as extending through the central opening of the retainer in a conventional manner while the end portion of the welding wire is held at the outer circumference of the welding wire coil. This allows the operator to instinctively distinguish between the different ends of the welding wire.

In order to prevent that the end portion of the welding wire unintentionally changes its position during transport and/or handling of the container, the end portion of the welding wire coil can be fixed to the container close to its upper end or to the upper surface of the retainer. This results in the end portion being immediately accessible to an operator after opening the top of the container.

According to a preferred embodiment of the invention, the length of the flaps, measured in a radial direction, is longer than the width of the welding wire coil. The term "width" used herein refers to the "wall thickness" of the cylindrical body formed by the welding wire turns. The length of the flaps in particular is chosen such that the flaps, if laid out flat in a plane, do not meet each other in the center of the retainer but form a central hole having a diameter which is approximately half the diameter of the central opening of the welding wire coil.

The invention will now be described with reference to the enclosed drawings which show different embodiments of the retainer and of the combination of a welding wire coil and the retainer. In the drawings,
- Figure 1 shows a top-view of a retainer according to a first embodiment,
- Figure 2 shows a schematic top-view of a welding wire container having a welding wire coil placed in its interior,
- Figure 3 schematically shows a cross-section through a welding wire container using the retainer of Fig. 1,
- Figure 4 schematically shows the welding wire container of Fig. 3 in a perspective view, with the dome removed,
- Figure 5 shows in a schematic top-view the retainer of Fig. 1 placed on the welding wire coil shown in Fig. 2,
- Figure 6 shows schematically how the forward end and the end portion of the welding wire are guided through the retainer,
- Figure 7 shows in a view similar to Fig. 6 how the forward end and the end portion of the welding wire are guided through the retainer according to the prior art,

- Figure 8 shows in a view comparable to Fig. 6 a retainer according to a second embodiment, and
- Figure 9 shows in a view comparable to Fig. 8 how the forward end and the end portion of the welding wire are guided through a retainer according to the prior art.

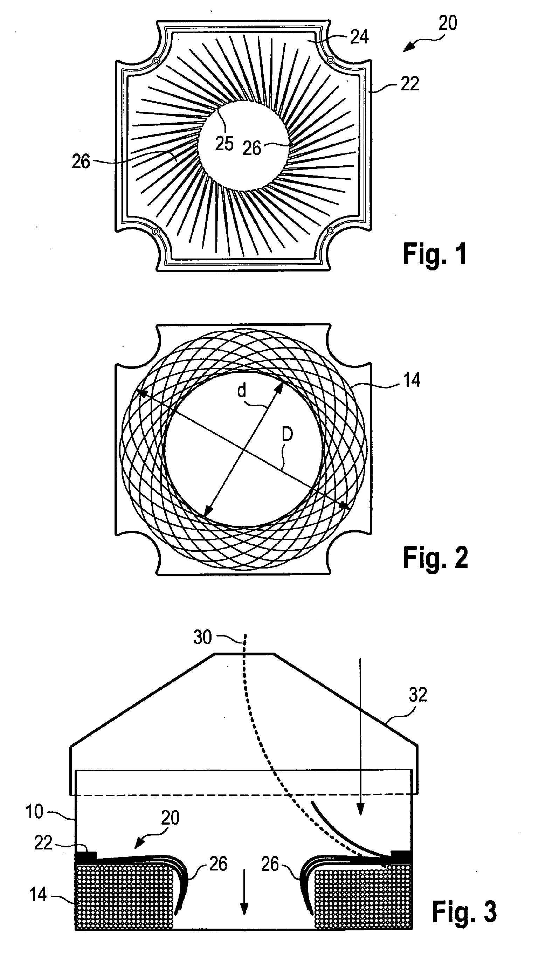

Figures 1 to 5 show a first embodiment. Here, a welding wire container 10 is shown which has a square cross-section and reinforcement elements 12 in the corners. In the interior of container 10, a welding wire coil 14 is placed. The welding wire coil is formed by placing a plurality of welding wire turns on top of each other, each turn being slightly displaced in a circumferential direction with respect to the previous one (please see in particular Fig. 2). The welding wire coil thus formed has an outer diameter D and an inner diameter d (please see Fig. 2). The inner diameter of the welding wire coil corresponds to the diameter of the hollow interior space formed within welding wire coil 14.

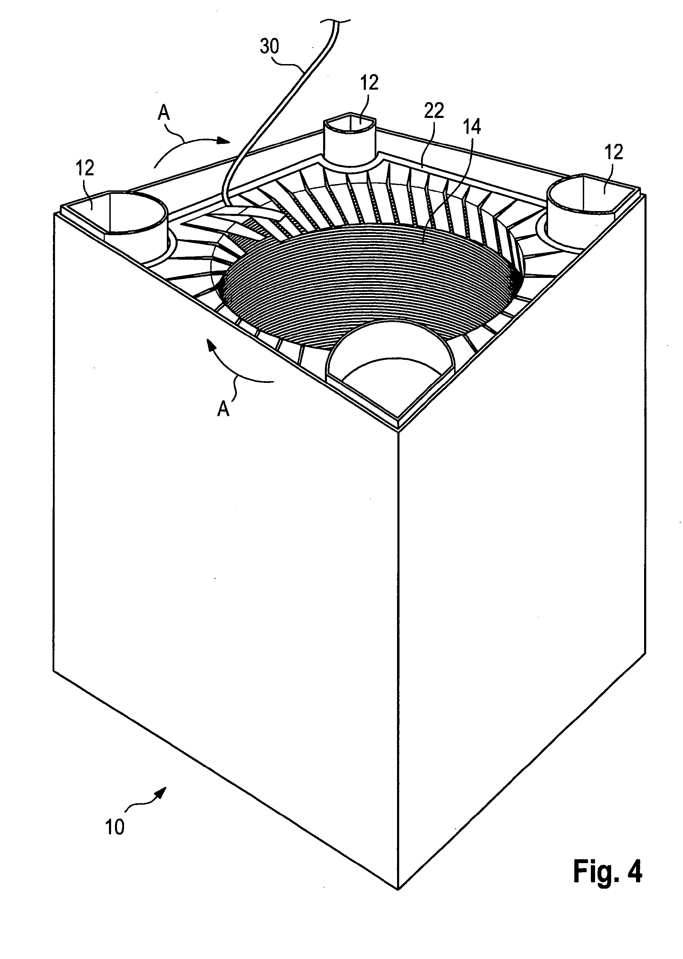

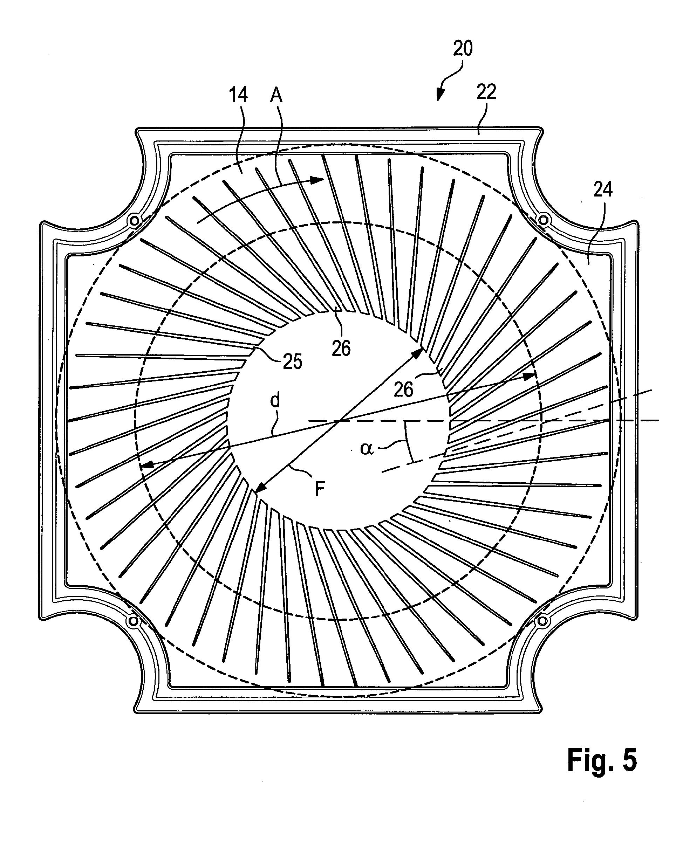

On the upper surface of welding wire coil 14, a retainer 20 is arranged. Retainer 20 comprises a frame 22 the contour of which basically corresponds to the inner contour of container 10. Frame 22 can in particular be formed from plastics. Frame 22 circumscribes a cover portion 24 which is adapted to be arranged on top of welding wire coil 14. Cover portion 24 is formed from a flexible, yet mechanically strong material, for example rubber, which is held in frame 22. A plurality of slots 25 are provided in the material of cover portion 24 so that a plurality of adjacent flaps 26 is formed. As can be seen in particular in Figures 4 and 5, the slots are not arranged exactly in a radial direction but obliquely thereto. Accordingly, the flaps 26 also do not extend exactly in a radial direction. In the example shown in Figure 5, the angle α between a radial direction and the direction in which the flaps extend, is approximately 20 degrees. The direction into which flaps 26 point corresponds to the direction in which the welding wire is lifted from the upper surface of the welding wire coil, which is the direction in which the point travels where the welding wire is lifted from the top surface of the welding wire coil (please see arrow A in Figure 5). As can also be seen in Figure 5, the length of the flaps is such that they protrude beyond the inner contour of welding wire coil 14, when they are extended straight. In particular, flaps 26 define an inner opening with a diameter F which is approximately half of the inner diameter d of welding wire coil 14.

As can be seen in Figures 3 and 4, retainer 20 is placed freely on top of welding wire coil 14. The flaps protrude over the inner contour of the welding wire coil, and as a consequence of their flexibility, their inner ends hang downwardly into the inner space of the welding wire coil. Accordingly, the retainer interacts with the upper surface of the welding wire coil, at which it is placed, and with the inner upper portion of the welding wire coil, where the downwardly hanging portion of the flaps helps to control the wire strands. As can be seen in Figures 3 and 4, a forward portion 30 of the welding wire is withdrawn from the welding wire coil in an upward direction, for example through a center of a dome 32 shown in Figure 3, resulting in the flaps being successively bent upwardly so as to allow the wire strand to be lifted from the upper surface of the welding wire coil. It is important to recognize that the flaps 26 allow the welding wire to almost directly be lifted upwardly, rather than first being dragged on the upper surface of the coil towards the center before being finally lifted.

As withdrawal of the welding wire progresses, the height of the welding wire coil decreases. Since the retainer is placed on top of the welding wire coil, it concurrently sinks downwardly in container 10, maintaining contact with the upper surface of the welding wire coil.

The retainer as such is a flat, plate-like element, as can be seen in Figure 3. For flaps 26, any flexible material can be used which on the one hand is strong enough to withstand the frictional forces resulting from contact with the welding wire, and on the other hand is flexible enough so that the flaps can hang downwardly into the interior space of the welding wire coil. Rubber or a plastic material with comparable material properties is particularly suitable. In the described embodiment, the flaps are formed as part of the cover portion. However, it is not absolutely necessary that the flaps are an integral part of the cover portion. Rather, they could be formed as separate parts attached to the cover portion or even to the frame. In any case, the retainer has to exert a down-holding force on the upper surface of the welding wire coil, and a holding force on the upper inner portion of the welding wire coil which ensures that the welding wire strands are kept in their correct position. Further, it is apparent that the outer contour of the retainer must not necessarily correspond to the inner contour of the container. In the example shown in Figures 1 to 5, the retainer would also properly work if his outer shape was not exactly adapted to reinforcing elements 12 of the container but would have for example an octagonal outer contour. In any case, it is essential that at least the majority of the upper surface of the welding wire coil be covered by the cover portion.

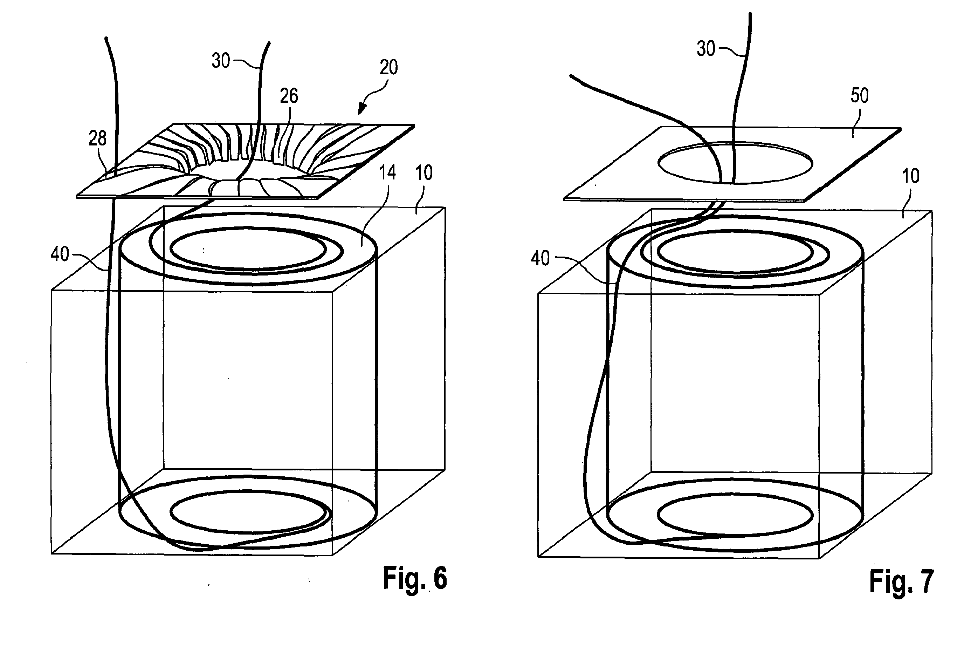

A beneficial feature of the retainer will now be described with reference to Figure 6. The retainer is provided with a positioning opening 28 which is here formed as a slot which extends further outwardly than the remaining slots. Through the positioning opening 28, an end portion 40 of the welding wire coil is guided to a location above retainer 20. Arranging end portion 40 radially outside the welding wire coil ensures that there is no contact between the forward portion 30 which is currently withdrawn, and end portion 40.

Figure 7 shows end portion 40 of a welding wire coil on which a conventional retainer is placed. As uninterrupted welding requires that the entire welding wire provided in the container can be withdrawn through the retainer (here symbolized by a flat, rigid plate 50), end portion 40 of the welding wire needs to be guided upwardly towards the upper end of the welding wire coil, and then inwardly underneath the retainer so that the end portion can finally be connected to the forward portion of an adjacent welding wire coil. It can be seen that there is a repeated engagement between the welding wire currently withdrawn and "traveling" around the upper surface of the welding wire coil, and the stationary end portion.

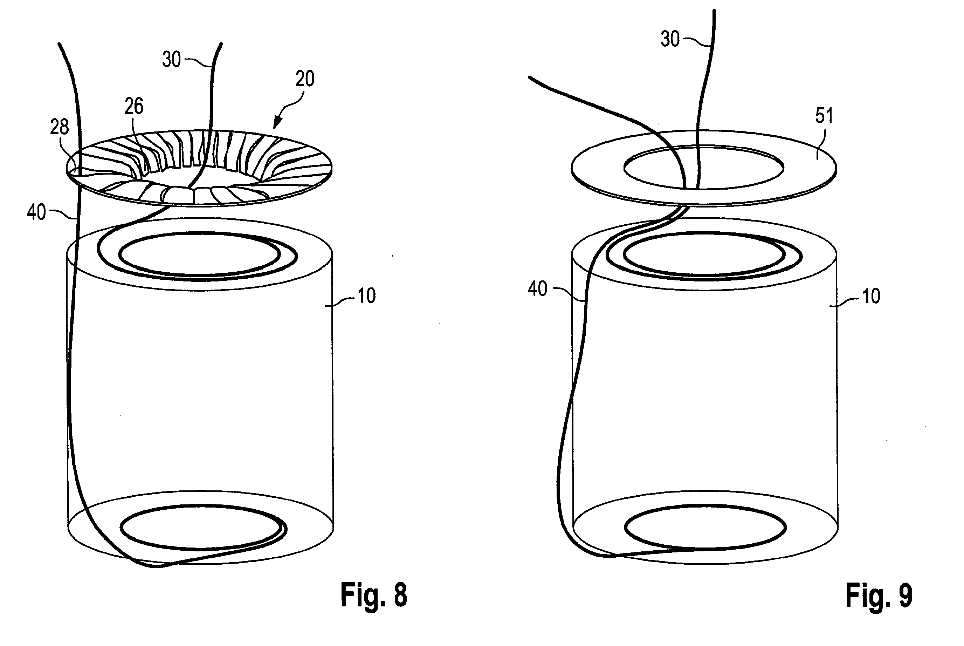

In Figure 8, there is shown a second embodiment of the retainer according to the invention. The difference between the embodiment shown in Figures 1 to 6 and the second embodiment is that in the second embodiment, retainer 20 is formed with a circular contour and is intended to be used in the interior of a container having a circular cross-section. It can be seen, in particular in comparison to Figure 9 which shows a retainer 51 according to the prior art, that end portion 40 of the welding wire is arranged at the outer circumference of the welding wire coil and does not interfere with the forward portion 30 of the welding wire which is currently withdrawn.

## Claims

1. A retainer (20) for a welding wire container (10), having a cover portion (24) adapted to be arranged on top of a welding wire coil (14), the cover portion having a plurality of flexible flaps (26), the flaps (26) being flexible enough to hang downwardly under the influence of gravity.

2. The retainer of claim 1 wherein the cover portion (24) is formed from a flexible material and the flaps (26) are defined by slots in the material of the cover portion (24).

3. The retainer of claim 2 wherein the slots extend in a direction which encloses an acute angle (α) with a radial direction.

4. The retainer of claim 2 or claim 3 wherein the slots extend almost up to the outer edge of the cover portion (24).

5. The retainer of any of the preceding claims wherein more than 20 flaps (26) are provided.

6. The retainer of claim 5 wherein more than 50 flaps (26) are provided, in particular approximately 100 flaps (26).

7. The retainer of any of the preceding claims wherein a frame (22) is provided which circumscribes the cover portion (24).

8. The retainer of any of the preceding claims wherein the cover portion (24) is made from a thin rubber or silicone layer.

9. The retainer, in particular according to any of the preceding claims, wherein a positioning opening (28) for an end portion (40) of the welding wire coil (14) is provided.

10. A combination of a welding wire coil and a retainer as claimed in any of the preceding claims wherein the flaps (26) hang loosely into the interior of the welding wire coil (14).

11. The combination of claim 10 wherein the length of the flaps (26), measured in a radial direction, is longer than the width of the welding wire coil (14).

12. The combination of claim 10 or claim 11 wherein the end portion (40) of the welding wire coil (14) is guided along the outside of the welding wire coil (14) upwardly and through the retainer (20).

13. The combination of claim 12 wherein the welding wire coil (14) is placed within a container (10) and wherein the end portion (40) of the welding wire coil (14) is fixed to the container (10) close to its upper end.

14. The combination of claim 12 wherein the end portion (40) of the welding wire coil (14) is fixed to the upper surface of the retainer (20).
